# EUROPEAN PATENT APPLICATION

(11) **EP 2 012 152 A1**
(43) Date of publication of application: **07.01.2009**
(21) Application number: 07112005.9
(22) Date of filing: 06.07.2007
(51) Int. Cl.: G02B 6/38

(54) **Optical Ferrule Retainer**

(71) Applicant: Ridgemount Technologies Limited, Launton Bicester Oxfordshire OX26 5EL (GB)
(72) Inventor: Limbert, Mark John, Towcester, Northamptonshire NN12 7AB (GB); Peters, Christopher Russel, Thame, Oxfordshire OX9 3YJ (GB)
(74) Representative: McLean, Robert Andreas

(57) **Abstract**

An optical ferrule retainer 1 which comprises:
an optical ferrule retainer 1 with a front section 7 of corresponding shape to cavities or features 20 in an optical receptacle 18 such that the Optical Ferrule Retainer 1, with orientated and retained optical ferrule 10 in position, can be inserted, coupled and retained into the optical receptacle 18 such that equivalent or increased levels of mechanical and optical performance to that of standard multipart plug connectors are achieved.

The optical ferrule retainer 1 is a single piece folded or moulded member comprising of a positional perpendicular datum feature 4 through which is formed a positional and location cavity 2 into which is formed an entry slot 3 through which an optical fibre 15 can be slotted. Forward of the perpendicular datum feature 4 is formed an orientation feature 6 against which the corresponding orientation features 11 on the optical ferrule assembly 10 are orientated, located and restrained. The positional perpendicular feature 4 with location cavity 2 also acts retaining shoulder stop against which the rear shoulder 13 on the optical ferrule assembly 10 butts. The positional nature of this shoulder on the perpendicular feature 4 creates when the optical ferrule assembly 10 is fitted, the relationship and control to the optical datum 12 on the optical ferrule assembly 10 such that when coupled into the optical receptacle 18 both mechanical and optical functionality are achieved.

Formed from the top of the perpendicular datum feature 4 is a sprung arm 9 onto which are located retaining lugs 5 which provide a positional and retention function when coupled into the optical receptacle 18. The sprung arm 9 also acts as a release mechanism by depressing the arm 9 to disengage the retaining lugs 5 from the corresponding cavities 21 in the optical receptacle 18.

## Description

This invention relates to an optical ferrule retainer.

Optical connections traditionally comprise of an optical receptacle into which on each side is coupled a plug connector. In the majority of connections the plug connectors coupled to an optical receptacle are of the same interface style, or even the same part.

In the majority of equipment and enclosure applications the optical receptacle is the interface between the internal components and the external connection. In these situations the external plug connector is traditionally of a more rugged form due to the need for regular handling, connects and disconnects, whereas the internal plug connector is of a simplified form rarely requiring disconnect after initial connection, but of a design form still including all interface components. In this traditional scenario the internal plug connector still uses an equivalent number of components parts to the external plug connector hence attracting the same level of cost to both procure and manufacture.

Recent advances in both equipment design and installation technologies has given rise to the need for simplified versions of the internal plug connector to reduce cost, improve installation and to permit optical ferrule only assemblies to be installed, or fitted into equipment, before determining the connector interface type.

The optical ferrule retainer solves the problem of the internal plug connector by providing a single component retaining mechanism which locates, orientates and retains an optical ferrule into the optical receptacle whilst maintaining mechanical and optical functionality. The optical ferrule retainer enables a pre-terminated (assembled) optical ferrule assembly to be slotted into the optical ferrule retainer negating the use of all traditional plug connector components. This solution greatly reduces the cost of the internal connection and also permits optical ferrule only terminations to be used during installation.

Embodiments of the invention will now be described by way of example only, with reference to the accompanying drawings, in which:
Figure 1 is a diagrammatic isometric view from the front representing the optical ferrule retainer according to the first embodiment of the invention.
Figure 2 is a diagrammatic isometric view from the front representing a typical optical ferrule assembly to be located into the optical ferrule retainer.
Figure 3 is a diagrammatic isometric view from the front representing the optical ferrule assembly with a typical optical ferrule slotted into position, orientated and located.
Figure 4 diagrammatic isometric view from the front representing one optical ferrule retainer assembly inserted into one channel of an optical receptacle and one optical ferrule retainer assembly on approach to insertion into the optical receptacle.

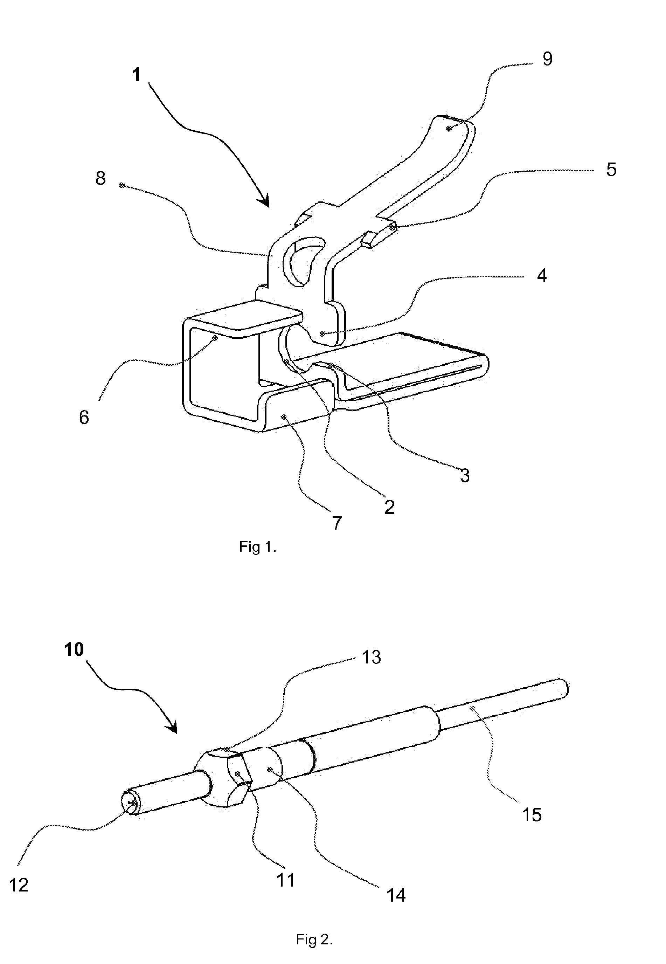

Referring to figure 1 and 2, a first embodiment of the invention provides an optical ferrule retainer 1 and optical fibre ferrule assembly 10.

The optical ferrule retainer 1 has generally rectangular form with either a singular or plurality of sprung retainers 9 folded back from one end and onto which are formed retention features 5 of comparable shape and size to locate and retain in the optical receptacle 18.

The optical ferrule retainer 1 has through its centre a location cavity 2 of corresponding shape and size to the required feature 14 on optical ferrule 10. Into this location cavity feature 2 is formed an entry slot 3 of corresponding shape and size to permit the insertion, through the slot, of the optical ferrule assembly 10 such that only the smallest diameter, the optical fibre 15, will slot into the optical ferrule retainer 1.

The optical ferrule retainer 1 has a perpendicular datum feature 4 through which the location cavity in housed. The perpendicular datum feature 4 controls the distance to the optical ferrule end face interface 12.

The optical ferrule retainer 1 has a front formed orientation feature 6 against which the orientation features 11 of the optical ferrule assembly 10 can be located and orientated to prevent movement during use.

The optical ferrule retainer 1 has a front formed location features 7 of corresponding shape and size to the optical receptacle which enables alignment and location into the optical receptacle 18 against the optical receptacle features 20.

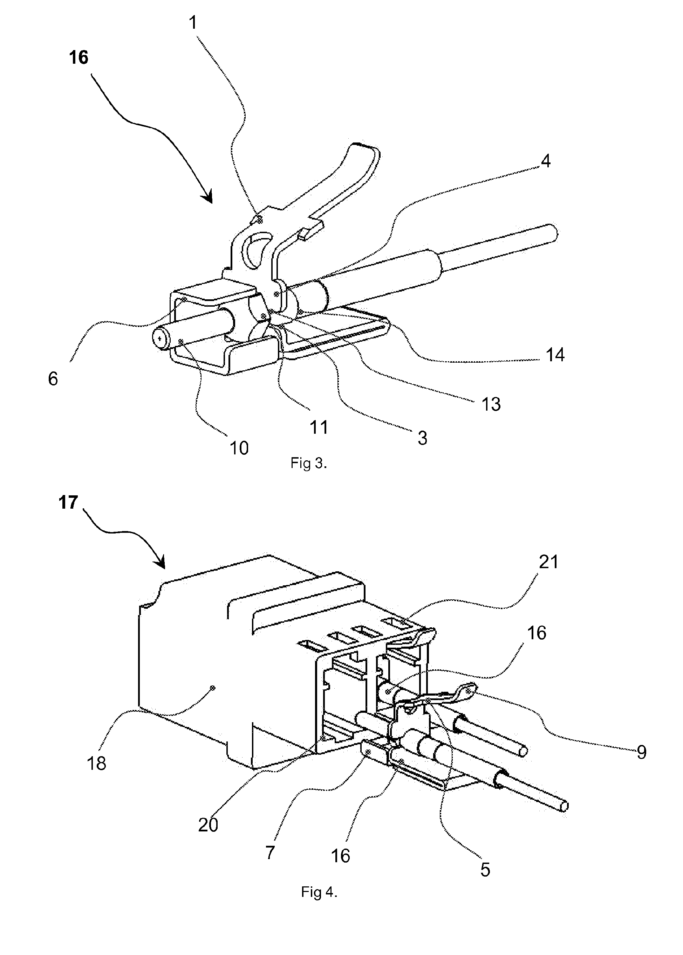

Referring to figure 3, the optical ferrule assembly 10 is fitted into the optical ferrule retainer 1 by passing the optical fibre 15 through the entry slot 3, rotating the optical ferrule assembly 10 such that the correct orientation of features 11 are achieved and aligned to the location plate 6, followed by pulling the optical ferrule assembly 10 back such that the rear shoulder 13 abuts the perpendicular datum face 4 of the optical ferrule retainer 1.

Referring to figure 4, the optical ferrule retainer assembly 16 is located into optical receptacle 18 by aligning location feature 7 with the corresponding cavity feature 20 in the optical receptacle and then inserting into the optical receptacle. As the optical ferrule retainer assembly 16 is inserted into the optical receptacle 18, the retaining feature 9 is depressed as it enters and on insertion the retaining features 5 on the retaining arm locates into the corresponding cavities 21 in the optical receptacle 18 to retain the optical ferrule assembly in the correct position and orientation. Release of the optical ferrule retainer assembly 10 is achieved by depressing the retaining arm 9 which disengages the retaining features 5. When the retaining arm 9 is depressed the optical ferrule retainer assembly with optical ferrule 16 can be pulled back and removed.

## Claims

1. An Optical Ferrule Retainer comprising:
a single formed metal or single plastic moulded member of corresponding shape to cavities or features in an optical receptacle such that the Optical Ferrule Retainer, with orientated and retained optical ferrule in position, can be inserted, coupled and retained into the optical receptacle such that equivalent or increased levels of mechanical and optical performance to that of standard multipart plug connectors are achieved.
an optical ferrule retainer wherein an optical fibre ferrule assembly or ferrule component, when fitted onto an optical fibre, can be slotted into, orientated and located into the optical ferrule retainer via an open slot feature in the optical ferrule retainer thus eliminating the traditional approach of first feeding the connector components over and onto the fibre, terminating the optical ferrule and then feeding on the remaining connector components.
an optical ferrule retainer wherein the optical ferrule retainer, with retained optical ferrule, can be inserted into an optical receptacle and removed using a standard cantilever latching mechanism.
an optical ferrule retainer of reduced length to enable function in confined spaces.

2. An Optical Ferrule Retainer as claimed in claim 1, whereby for reasons of size when a traditional connector is too big to pass through a micro tube, the optical ferrule retainer can fitted to an optical ferrule assembly after it has been fed through a micro tube to form an optical ferrule and retainer assembly which can be orientated, mated to and retained in a standard optical receptacle.

3. An Optical Ferrule Retainer as claimed in claim 1 wherein the Optical Ferrule Retainer assembly is of different colours to enable optical channel identification.

4. An Optical Ferrule Retainer as claimed in claim 1 wherein the Optical Ferrule Retainer has different alpha or numeric identification to enable optical channel identification.
